# EUROPÄISCHE PATENTSCHRIFT

(11) **EP 1 760 446 B1**
(45) Veröffentlichungstag und Bekanntmachung des Hinweises auf die Patenterteilung: **17.08.2016**
(21) Anmeldenummer: 06018081.7
(22) Anmeldetag: 30.08.2006
(51) Int. Cl.: G01M 17/007

(54) **Fahrzeugfunktionsprüfstand**
Vehicle function test stand
Banc d'essai du fonctionnement de véhicule

(30) Priorität: 02.09.2005 DE 102005042025
(43) Veröffentlichungstag der Anmeldung: 07.03.2007
(73) Patentinhaber: Dürr Assembly Products GmbH, 66346 Püttlingen (DE)
(72) Erfinder: Tentrup, Thomas, Dr., 66663 Merzig-Mechem (DE); Schenk, Jan, 66346 Püttlingen (DE); Kurt, Ismail, 66333 Völkingen (DE); Morawietz, Timm, 66636 Tholey (DE)
(74) Vertreter: Vièl, Christof

(56) Entgegenhaltungen:
- EP-A- 1 519 182
- EP-A- 1 596 179
- WO-A-92/20997
- WO-A-98/13220
- DE-A1- 4 136 508
- DE-A1- 10 231 525
- US-A- 6 044 696

## Beschreibung

Die Erfindung betrifft einen Fahrzeugfunktionsprüfstand mit über einen Antrieb antreibbaren Belastungseinrichtungen, die kraft- und/oder formschlüssig mit den Rädern, den Radflanschen, den Radnaben bzw. daran angebrachten Adaptionsmitteln verbindbar sind, wobei auf einer reibungsarm gelagerten Platte mit zwei translatorischen und einem rotatorischen Freiheitsgrad die zur Anpassung an den Sturz des Fahrzeuges schwenkbaren Belastungseinrichtungen angeordnet sind.

Fahrzeugfunktionsprüfstände sind bekannt. Sie werden bei Automobilherstellern am Bandende ("End of Line") eingesetzt werden und dienen der Überprüfung des Antriebsstrangs bzw. seiner Komponenten wie z. B. um Brems- ABS-, Schaltungs- oder Elektronikprüfungen durchzuführen.

Üblicherweise sind Fahrzeugfunktionsprüfstände, sogenannte Rollenprüfstände, mit Scheitellaufrollen bzw. Doppellaufrollensätzen versehen, welche verschiedene Nachteile mit sich bringen. Bei der Funktionsprüfung der Fahrzeuge ergibt sich bei Verwendung der Funktionsprüfstände mit Laufrollen in Folge der Reibung bereits vor der Auslieferung des Fahrzeugs an den Endkunden eine Abnutzung der Reifen. Weiterhin ist bei Verwendung von Laufrollen ein fester Reibwert zwischen den Reifen und den Laufrollen vorhanden. Die geringe Bodenfreiheit eines Teils der heutigen Fahrzeuge kann bei Verwendung eines Rollenprüfstandes ein weiteres Problem sein, wenn die Räder des Fahrzeugs jeweils zwischen ein Rollenpaar aufgenommen und auf Grund von Leistungsprüfungen leistungsstarker Fahrzeug weit einsinken müssen. Dabei kann das Fahrzeug unter Umständen auf den Laufrollen des Fahrzeugfunktionsprüfstandes aufsitzen.

Weitere Nachteile von herkömmlichen Rollenprüfständen sind z.B. eine schlechte oder gar keine Zugänglichkeit des Fahrzeugs von unten während der Prüfung sowie die Gefahr, dass das Fahrzeug bei Leistungsprüfungen des Prüfstand ungewollt verlassen kann (sog. Herausfahren, gerade bei leistungsstarken Allradfahrzeugen). Bei Rollenprüfständen ist zudem eine vollständige Automatisierung, d.h. ein fahrerloser Prüfbetrieb, nur mit extrem hohem technischem Aufwand zu realisieren.

Aus der DE 102 31 525 A1 sind ein Verfahren und eine Vorrichtung zur Schlupfsimulation auf Fahrzeugprüfständen bekannt, wobei Mittel vorhanden sind, durch die sich die Aufstandskraft F_{A} eines Rades in vorbestimmbarer Weise verändern läßt, indem die Radaufstandskraft F_{A} bei sich drehendem Rad in vorbestimmter Weise vom Reifen auf eine Vorrichtung verlagert wird.

Die WO 98/13220 A1 beschreibt eine Radbefestigung für Fahrzeuge mit einer den Reifen tragenden Felge, welche mittels axial wirkender Vorspannmittel mit einer im Radträger drehbar gelagerten, eine Radaufnahme aufweisenden Welle verbindbar ist und Mittel zur formschlüssigen Drehmoment- und Schubkraftübertragung aufweist, welche durch eine an Felge und Radaufnahme angebrachte, unter vollständiger Aufnahme der Vorspannkraft formschlüssig und spielfrei in Eingriff bringbare, die Felge zentrierende und in drei Raumrichtungen ausrichtende Profilierung gebildet ist.

Aus der EP 1 519 182 A2 ist ein Prüfstand für Fahrzeuge, Fahrzeugkomponenten oder dergleichen bekannt, wobei mindestens ein Belastungs-System bestehend aus einer stationären Plattform, einer beweglichen Plattform sowie diese verbindende ansteuerbaren Arbeitszylindern vorgesehen ist und wobei die bewegliche Plattform mit dem Prüfling gekoppelt ist und wobei durch Ansteuerung der Arbeitszylinder mittels der beweglichen Plattform Kräfte und/oder Momente und/oder Wege auf den Prüfling übertragbar sind und die bewegliche Plattform als Spannzeug für den Prüfling ausgebildet ist.

Eine Vorrichtung zum Testen und Beurteilen der Leistung von Kraftfahrzeugen unter simulierten Bedingungen, die Drehmomentübertragungsvorrichtungen zum Verbinden an die Radnaben des Kraftfahrzeuges, bewegliche Trägerelemente für die Drehmomentübertragungsvorrichtungen und eine Kraftaufbringeinheit zum Verbinden mit dem Kraftfahrzeug aufweist, ist aus der US 6,044,696 A bekannt.

In der DE 41 36 508 A1 wird ein Kraftfahrzeugprüfstand mit mindestens einer Belastungsmaschine zur Belastung der Radantriebswellen eines Kraftfahrzeuges beschrieben, bei dem eine Spezialfelge vorgesehen ist, die zwei relativ zueinander drehbare Felgenteile einerseits anstelle eines Fahrzeugrades mit einer vom Kraftfahrzeugmotor antreibbaren Radantriebswelle drehfest verbindbar ist und andererseits mit einer Anschlußwelle der Belastungsmaschine drehfest verbindbar ist und von welchem der andere Felgenteil als nicht rotierende Fahrzeugstütze wirkt.

Die WO 92/20997 A1 beschreibt einen Prüfstand zur Prüfung von Parametern der Laufwerke eines Kraftfahrzeuges, wobei mindestens vier unabhängig aufgehängte Schemel vorgesehen sind. In jedem Schemel ist mindestens eine Rolle angetrieben und jeder Schemel ist auf je vier Aufhängeelementen aufgehängt und jedes Aufhängeelement ist wiederum mit je einem zur Zugkraft im Aufhängeelement proportionalen Signal erzeugenden, elektronischen Signalgeber verbunden, der an den Eingängen eines Computers angeschlossen ist.

In der nicht vorveröffentlichten Patentanmeldung mit dem Aktenzeichen des Deutschen Patent- und Markenamts DE 10 2004 023 730.1 ist ein Prüfstand beschrieben, bei dem auf einem Grundrahmen für jedes zu prüfende Rad eine Grundplatte vorgesehen ist, wobei zwischen den Grundplatten das zu prüfende Fahrzeug positioniert werden kann, wobei mindestens zwei einander gegenüberliegende Grundplatten in Fahrzeug-x-Richtung beweglich und feststellbar sind, wobei auf jeder Grundplatte eine Trägerplatte in Fahrzeug-y-Richtung beweglich und feststellbar ist, auf der Belastungsvorrichtungen angeordnet sind, wobei die Trägerplatte einerseits "kraftlos" verfahrbar und andererseits über die Belastungsvorrichtungen ein Gegenmoment bzw. eine Gegenkraft, z.B. zur Simulation eines Lenkrückstellmoments, erzeugbar ist und auf das jeweilige Rad bzw. den Radflansch aufbringbar ist,

Durch diese Maßnahmen wird es zum einen möglich, einen Fahrzeugfunktionsprüfstand ohne Laufrollen zu schaffen, und zum anderen, weitere Funktionalitäten von Kraftfahrzeugen, z.B. das beim Lenken durch Querkräfte, Hochkräfte und Radumfangskräfte verursachte Lenkrückstellmoment zu simulieren. Insbesondere sind hohe Antriebs- und Bremsmomente (auch bei Allradfahrzeugen) übertragbar bzw. messbar. Während der Prüfung werden weiterhin die Reifen des Fahrzeugs nicht belastet, weil diese entweder gar nicht montiert sind oder zumindest nicht in Kontakt mit der Laufrolle des Prüfstandes stehen. Das bedingt ebenfalls die freie, simulationstechnische Wahl des Reibwertes durch eine geeignete Ansteuern der Belastungseinheiten des Fahrzeugfunktionsprüfstandes. Außerdem wird das Fahrzeug durch die konstruktiven Gegebenheiten dieses Prüfstandes ausfahrsicher im Prüfstand fest gehalten, was ein unbeabsichtigtes Herausfahren unmöglich macht.

Aufgabe der Erfindung ist es, einen Fahrzeugfunktionsprüfsstand zu entwickeln, mit der es möglich ist, an einem Fahrzeug Funktionsprüfungen, z.B. Brems-, ABS-, Schaltungs- und Elektronikprüfungen und Fahrwerksgeometrieeinstellungen durchzuführen, also einen kombinierten Fahrzeugfunktionsprüfstand und Fahrwerkgeometrieeinstellstand zu schaffen.

Diese Aufgabe wird erfindungsgemäß dadurch gelöst, daß Mittel zum Bestimmen der Fahrwerksgeometrie des Fahrzeuges vorgesehen sind, welche auf Meßflächen gerichtet sind, die die Spur- und Sturzwerte des Fahrzeugs wiedergeben und die entweder auf dem Radadapter oder auf Komponenten, die der Anbindung der Belastungseinrichtung an das Fahrzeug dienen, angeordnet sind.

Es wird also ein Fahrzeugfunktiönsprüfstand mit cinem Fahrwerkgeometrieeinstellstand kombiniert, so daß sowohl Fahrzeugfunktionsprüfungen als auch die Fahrwerkgeometrieeinstellungen an diesem vorgenommen werden können. Gemäß dem Stand der Technik wurden hierfür ein Rollenprüfstand und ein Fahrwerkstand benötigt. Von Bedeutung sind hierbei sowohl die reibungsarme Lagerung als auch die Entkopplung der Belastungseinrichtungen und der Mittel zum Bestimmen der Fahrwerkgeometrie.

Eine Ausbildung der Erfindung besteht darin, daß die reibungsarm gelagerte Platte eine Schwimmplatte ist.

Eine andere Ausbildung der Erfindung ist dadurch gekennzeichnet, daß die reibungsarm gelagerte Platte zwei rechtwinklig zueinander angeordnete Linearführungen sowie ein Drehgelenk aufweiset.

Im Rahmen der Erfindung ist vorgesehen, daß die Mittel zum Bestimmen der Fahrwerkgeometrie Punktlaser oder Meßtaster sind.

Erfindungsgemäß ist weiterhin vorgesehen, daß die Belastungseinrichtungen als ein Nullpunktspanner mit einer darauf vorgesehenen Hirt-Stimverzahnung ausgebildet ist, der mit einem an dem Radflansch des Fahrzeugs befestigten Radadapter, welcher ebenfalls eine Stirnverzahnung aufweiset und das Gegenstück des Nullpunktspanners trägt, in Wirkverbindung setzbar ist.

Es ist zweckmäßig, daß die Belastungseinrichtungen mit dem Radflansch durch eine Schraubverbindung verbindbar sind.

Zur Erfindung ist weiterhin gehörig, daß zur Verbindung zwischen dem Antrieb und den Belastungseinrichtungen eine homokinetische Gelenkwelle vorgesehen ist.

Schließlich ist im Rahmen der Erfindung vorgesehen, daß zur Aufnahme des Kippmoments der schwenkbaren Belastungseinrichtungen ein mit Druck beaufschlagbarer Zylinder vorgesehen ist.

Nachfolgend wird ein Ausführungsbeispiel der Erfindung anhand von Zeichnungen beschrieben.

Es zeigt
- Fig. 1: einen erfindungsgemäßen Fahrzeugfunktionsprüfstand in perspektivischer Ansicht,
- Fig. 2: das einem Fahrzeugrad zugeordnete Aggregat des Fahrzeugfunktionsprüfstandes in perspektivischer Ansicht,
- Fig. 3: eine Detailansicht des einem Fahrzeugrad zugeordnete Aggregats,
- Fig. 4: die Mittel zum Anbinden der Belastungseinheit an das Fahrzeug in Explosionsdarstellung.

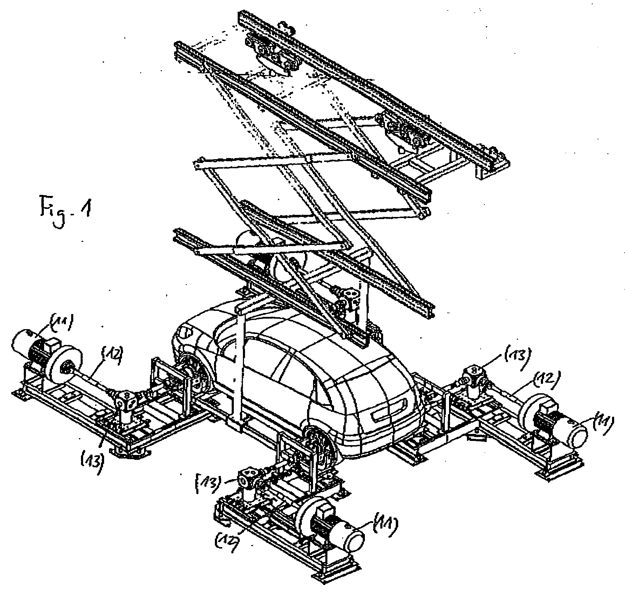

Wie aus Fig. 1 hervorgeht, werden die Fahrzeuge vorzugsweise im Gehänge, das, wie in Fig. 1 als Hubgehänge ausgebildet sein kann, durch den erfindungsgemäßen Fahrzeugfunktionsprüfstand und Fahrwerkgeometriccinstellstand (nachfolgend: "Prüf- und Einstellstand"), welcher sich üblicherweise im Bereich der Endmontage befindet, gefördert. Das Fahrzeug wird entweder (wie in Fig. 1 dargestellt) auf dem Prüf und Einstellstand abgesetzt oder aber dieser gegen das in dem Gehänge befindlichen Fahrzeug hochgefahren. Die Fahrzeuge können somit mit oder ohne Räder den Prüf und Einstellstand durchlaufen.

Jedem der Fahrzeugräder ist ein Aggregat zugeordnet, das eine Belastungseinrichtung, die kraft- und/oder formschlüssig mit den Rädern, den Randflanschen, den Radnaben bzw. daran angebrachten Adaptionsmitteln verbindbar ist, und Mittel zum Bestimmen der Fahrwerksgeometrie des Fahrzeuges aufweist.

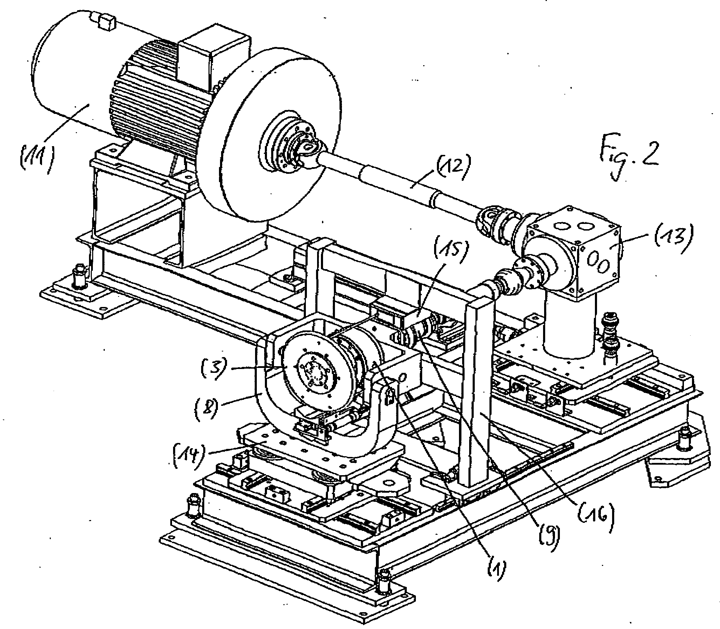

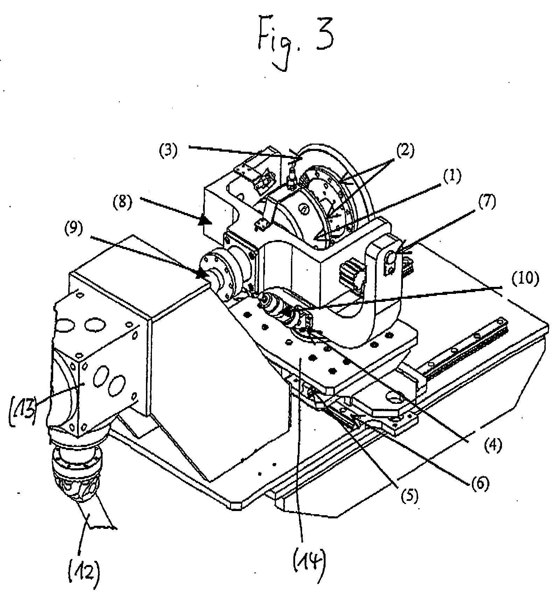

Ein solches Aggregat ist in den Fig. 2 und 3 dargestellt. Ein Antrieb 11 treibt über eine Welle 12 und ein Getriebe 13 eine homokinetische Gelenkwelle 9 an. Da zur Realisierung der Funktionstests, der Fahrwerksgeometriemessungen und -einstellungen eine reibungsarme Lagerung der entsprechenden Einheiten erforderlich ist, ist auf einer Schwimmplatte oder, wie hier dargestellt, einer Platte 14, die auf einer Kombination von Linearführungen 5, 6 mit einem Drehgelenk. 4 angeordnet ist, eine Aufnahme 8 vorgesehen, welche um ein Gelenk 7 schwenkbar und somit den Sturzwerten des Fahrzeugs anpaßbar ist. Zur Aufnahme des Kippmomentes der Aufnahme 8 ist ein druckbcaulschlagbarer Zylinder 10 vorgeschen. Die Bewegungsabläufe des Gelenks 7 und der homokinctischen Gelenkwelle 9 sowie der Schwimmebene müssen reibungsarm ausgelegt werden.

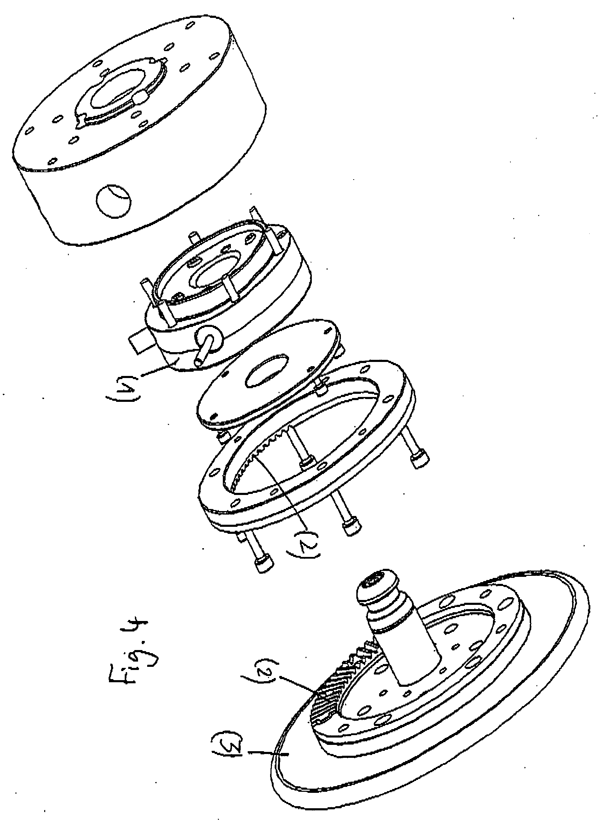

Wie den Fig. 2, 3 und 4 zu entnehmen ist, trägt die Aufnahme 8 zur Anbindung der Belastungseinrichtung an das Fahrzeug einen mit der homokinetischen Gelenkwelle 9 verbundenen Nullpunktspanner 1, der eine IIirth-Stirnverzahnung 2 aufweist. Als Gegenstück hierfür dient ein Radadapter 3, der am Radflansch befestigbar ist und der ebenfalls eine Stirnverzahnung 2 und das Gegenstück des Nullpunktspanners tragt. Es ist allerdings auch möglich, die Belastungseinrichtung ohne diese Einheit durch einfaches Verschrauben mit dem Radflansch zu verbinden. Wie in Fig. 3 erkennbar ist, kann der Antrieb 11 auch unterhalb der Ebene; in der sich die Belastungs und die Meßeinrichtungen befinden, angeordnet sein.

Zum Messen der Fahrzeuggeometrie werden Meßflächen benötigt, die exakt die Spur- und Sturzwerte des Fahrzeuges wiedergeben. Diese können entweder auf dem Radadapter 3 oder auch auf Komponenten, die der Anbindung der Belastungseinrichtung an das Fahrzeug dienen, angeordnet sein, welche die oben beschricbenen Freiheitsgrade aufweisen, z.B. dem Nullpunktspanner 1 oder der Aufnahme 8.

Die notwendigen Messungen zum Definieren der Spur- und Sturzwerte können beispielsweise durch Punktlaser oder durch Meßtaster erfolgen, welche auf den oben genannten Flächen eine Dreipunktmessung durchführen. In Fig. 2 ist ein derartiger Punktlaser 15 dargestellt, dessen Strahl auf den Radadapter 3 gerichtet ist. Der Punktlaser 15 ist auf einem Portal 16 angeordnet, welches verschicbbar ausgebildet ist, so daß der seitliche Abstand zu dem Fahrzeug veränderbar ist.

Die Meßeinheit für die Fahrzeugfunktionsprüfungen ist in den Antrieb integriert.

Der vorliegende Prüf- und Einstellstand ermöglicht insbesondere Fahrwerkmessungen bei kräflefreiem Drehen der Räder, einen Lenkeinschlag und es kann neben Funktionsprüfungen des Fahrzeuges auch die Fahrwerkgeometrie gemessen und eingestellt werden.

## Patentansprüche

1. Fahrzeugfunktionsprüfstand mit über einen Antrieb antreibbaren Belastungseinrichtungen, die kraft- und/oder formschlüssig mit den Rädern, den Radflanschen, den Radnaben bzw. daran angebrachten Adaptionsmitteln verbindbar sind, wobei auf einer reibungsarm gelagerten Platte (14) mit zwei translatorischen und einem rotatorischen Freiheitsgrad die zur Anpassung an den Sturz des Fahrzeuges schwenkbaren Belastungseinrichtungen (1, 2, 3, 7, 8) angeordnet sind, **dadurch gekennzeichnet, daß** Mittel (15) zum Bestimmen der Fahrverksgeometrie des Fahrzeuges vorgesehen sind, welche auf Meßflächen (1, 3, 8) gerichtet sind, die die Spur- und Sturzwerte des Fahrzeuges wiedergeben und die entweder auf dem Radadapter (3) oder auf Komponenten, die der Anbindung der Belastungseinrichtung an das Fahrzeug dienen, angeordnet sind.

2. Fahrzeugfunktionsprüfstand gemäß Anspruch 1, **dadurch gekenntzeichnet,** daß die reibungsarm gelagerte Platte eine Schwimmplatte ist.

3. Fahrzeugfunktionsprüfstand gemäß Anspruch 1, **dadurch gekennzeichnet, daß** die reibungsarm gelagerte Platte (14) zwei rechtwinklig zueinander angeordnete Linearführungen (5, 6) sowie ein Drehgelenk (4) aufweist.

4. Fahrzeugfunktionsprüfstand gemäß Anspruch 1, **dadurch gekennzeichnet, daß** die Mittel (15) zum Bestimmen der Fahrwerksgeometrie Punktlaser (15) oder Meßtaster sind.

5. Fahrzeugfunktionsprüfstand gemäß Anspruch 1, **dadurch gekennzeichnet, daß** die Belastungseinrichtungen (1, 2, 3, 7, 8) als ein Nullpunktspanner (1) mit einer darauf vorgesehenen Hirt-Stirnvcrzahnung (2) ausgebildet ist, der mit einem an dem Radflansch des Fahrzeuges befestigten Radadapter (3), welcher ebenfalls eine Stirnverzahnung (2) aufweist und das Gegenstück des Nullpunktspanners (1) trägt, in Wirkverbindung setzbar ist.

6. Fahrzeugfunktionsprüfstand gemäß Anspruch 1, **dadurch gekennzeichnet, daß** die Belastungseinrichtungen (1, 2, 3, 7, 8) mit dem Radflansch durch eine Schraubverbindung verbindbar ist.

7. Fahrzeugfunktionsprüfstand gemäß Anspruch 1, **dadurch gekennzeichnet, daß** zur Verbindung zwischen dem Antrieb (11, 12, 13) und den Belastungseinrichtungen (1, 2, 3, 7, 8) eine homokinetische Gelenkwelle (9)vorgesehen ist.

8. Fahrzeugfunktionsprüfstand gemäß Anspruch 1, **dadurch gekennzeichnet, daß** zur Aufnahme des Kippmoments der schwenkbaren Belastungseinrichtungen (1, 2, 3, 7, 8) ein mit Druck beaufschlagbarer Zylinder (10) vorgesehen ist.

## Claims

1. Vehicle function test stand having loading devices drivable via a drive unit and connectable in non-positive or positive manner to the wheels, wheel flanges, wheel hubs or adapter discs attached thereto, the loading devices (1, 2, 3, 7, 8), which are pivoted for purposes of adapting them to the vehicle's camber angle, being disposed on a plate (14) supported in a low-friction mounting and having two translators and one rotatory degree of freedom, **characterised in that** means (15) for determining the vehicle's chassis geometry are provided, which are directed at measuring surfaces (1, 3, 8) that reproduce the vehicle's toe and camber values and are disposed either on the wheel adapter (3) or on components serving to connect the loading device to the vehicle.

2. Vehicle function test stand according to claim 1, **characterised in that** the plate supported in a low-friction mounting is a float plate.

3. Vehicle function test stand according to claim 1, **characterised in that** the plate (14) supported in a low-friction mounting features two mutually perpendicular linear guideways (5, 6) and a swivel joint (4).

4. Vehicle function test stand according to claim 1, **characterised in that** the means (15) for determining the vehicle geometry are point lasers (15) or measuring sensors.

5. Vehicle function test stand according to claim 1, **characterised in that** the loading devices (1, 2, 3, 7, 8) are configured as a zero point clamping element (1) with Hirth-type serrations (2) provided thereon and can be made to interact with a wheel adapter (3) attached to the vehicle's wheel flange, said adapter also having radial serrations (2) and bearing the counterpart of the zero point clamping element (1).

6. Vehicle function test stand according to claim 1, **characterised in that** the loading devices (1, 2, 3, 7, 8) are connectable to the wheel flange by means of a threaded joint.

7. Vehicle function test stand according to claim 1, **characterised in that** a homokinetic joint shaft (9) is provided for the connection between the drive (11, 12, 13) and the loading devices (1, 2, 3, 7, 8).

8. Vehicle function test stand according to claim 1, **characterised in that** a pressurisable cylinder (10) is provided to resist the overturning moment of the pivoted loading devices (1, 2, 3, 7, 8).

## Revendications

1. Banc d'essai du fonctionnement d'un véhicule muni de dispositifs de chargement pouvant être entraînés par entraînement et pouvant être reliés en force ou par emboîtement de forme aux roues, aux brides de roue, aux moyeux de roue ou à des adaptateurs disposés sur ceux-ci, les dispositifs de chargement (1, 2, 3, 7, 8), qui peuvent basculer pour un ajustement au carrossage du véhicule, étant disposés sur une plaque (14) logée avec peu de frottement en présentant deux degrés de liberté en translation et un degré de liberté en rotation, **caractérisé en ce que** des moyens (15) sont prévus pour déterminer la géométrie du châssis du véhicule, lesquels sont dirigés vers des surfaces de mesure (1, 3, 8) qui reproduisent les valeurs de parallélisme et de carrosserie du véhicule et qui sont disposées soit sur l'adaptateur de roue (3) soit sur les composants qui servent à la fixation du dispositif de chargement sur le véhicule.

2. Banc d'essai du fonctionnement d'un véhicule selon la revendication 1, **caractérisé en ce que** la plaque logée avec peu de frottement est une plaque flottante.

3. Banc d'essai du fonctionnement d'un véhicule selon la revendication 1, **caractérisé en ce que** la plaque logée avec peu de frottement (14) présente deux guides linéaires (5, 6) disposés à angle droit l'un de l'autre ainsi qu'une articulation tournante (4).

4. Banc d'essai du fonctionnement d'un véhicule selon la revendication 1, **caractérisé en ce que** les moyens pour déterminer la géométrie du châssis sont des lasers à point (15) ou des capteurs de mesure.

5. Banc d'essai du fonctionnement d'un véhicule selon la revendication 1, **caractérisé en ce que** les dispositifs de chargement (1, 2, 3, 7, 8) sont conçus sous la forme d'un tendeur à point zéro (1) muni d'un crantage Hirth à dents de loup (2) et qui peut être mit en liaison fonctionnelle avec un adaptateur de roue (3) fixé sur la bride de roue du véhicule et qui est muni lui aussi d'un crantage à dents de loup (2) et porte la pièce complémentaire au tendeur à point zéro (1).

6. Banc d'essai du fonctionnement d'un véhicule selon la revendication 1, **caractérisé en ce que** les dispositifs de chargement (1, 2, 3,7, 8) peuvent être reliés à la bride de roue au moyen d'un assemblage par vis.

7. Banc d'essai du fonctionnement d'un véhicule selon la revendication 1, **caractérisé en ce qu**'un arbre de transmission à joint de cardan homocinétique (9) est prévu pour la liaison entre l'entraînement (11, 12, 13) et les moyens de chargement (1, 2, 3, 7, 8).

8. Banc d'essai du fonctionnement d'un véhicule selon la revendication 1, **caractérisé en ce qu'**un cylindre (10) pouvant être alimenté en pression est prévu pour absorber le couple de renversement des moyens de chargement basculants (1, 2, 3, 7, 8).
